# EUROPEAN PATENT APPLICATION

(11) **EP 3 367 305 A1**
(43) Date of publication of application: **29.08.2018**
(21) Application number: 16791707.9
(22) Date of filing: 18.10.2016
(51) Int. Cl.: G06K 9/20, G06K 9/34

(54) **PACKAGING RECOGNISABLE BY DIFFERENT TYPES OF MEANS, SYSTEM AND METHOD FOR PREPARING EDIBLE PRODUCTS ON THE BASIS OF SAID RECOGNISABLE PACKAGING**

(30) Priority: 25.10.2015 PT 16108910
(71) Applicant: ALVA ALTA, LDA, 1990-237 Lisboa (PT)
(72) Inventor: DE JESUS PIEDADE, Fernando Manuel, 1000-138 Lisboa (PT); RODRIGUES CHAVES FERREIRA, Paulo Alexandre, 1000-138 Lisboa (PT); TEIXEIRA E SILVA CARDOSO, Paulo Alexandre, 1990-237 Lisboa (PT)
(74) Representative: Liebl, Thomas
(86) International application number: PCT/PT2016/000011
(87) International publication number: WO 2017/074207

(57) **Abstract**

The present invention refers to a single portion package (1) configured for collecting at least one edible substance and adapted for preparing a respective edible product, such as for example a beverage, comprising at least one outside surface (2) that presents symbols that are recognizable by human means and by automatic means, whereby said outside surface (2) presents markers (3) provided so that at least the relative orientation of said outside surface (2) can be referenced relative to an observation direction, preferentially also the image of at least one identity mark (4) can be recognized by means of automatic image processing means.

The present invention further refers to a system for distribution of edible products that comprises at least two types of packages (1, 1') recognizable by human means and by automatic means, and at least one type of machine (1) adapted for preparing edible products based upon said types of packages (1, 1').

The present invention further refers to a process of preparation of edible products based upon said recognizable packages (1, 1').

## Description

### Field of the invention

The present invention refers to packages recognizable by human and electronic means, configured so as to collect single portions of edible substances and adapted for preparing edible products, such as for example for preparing beverages.

The present invention further refers to a system, as well as to a process of preparing edible products based upon said recognizable packages.

### Background of the invention

The prior art includes different solutions of single portion packages, provided for example in the form of sachets, pads or capsules, adapted for the preparation of beverages in respective machines, including by means of extraction of an aromatic substance, such as for example espresso type coffee and other types of beverages. A particularly relevant aspect is the possibility of a coffee machine to recognize a given type of capsule, notably in view of adjusting the operation parameters, such as for example injection pressure and temperature, to the contents of said type of capsule.

The prior art includes several approaches, including by means of processing optical data so as to recognize a symbol associated with a respective capsule. However, the generality of the solutions refer to the recognition of a bidimensional code ("2D code recognition"), such as for example a bar code or similar, for example by means of laser devices. The use of an image presents several advantages relative to that of a code or RFID, because in general there are not necessary so many information parameters for this purpose as those provided by a bar code or RFID. Examples of this type of solution are disclosed in documents WO 02/28241 A1, EP 1440640 B1, EP 1786303 B1.

In the case of the optical recognition of an image including symbols ("optical character recognition") it is necessary to use recognition means, whereby the technical characteristics of these means can substantially increase the costs as a function of the requisites associated with certain technical parameters.

For example, in the case of a single portion package adapted for use in a coffee machine or similar, a user can introduce said package in an angular position that does not correspond to the fixed position of the recognition means, thereby requiring recognition means with greater processing capacity.

A type of solution for this problem is the disposition of the symbol at the centre of a reading surface, or the repetition of a given sequence along an angular direction. Examples are discloses in documents WO 2011/089048 A1, WO 2011/141532 A1 and WO 2011/141535 A1.

Document EP 1379153 B1 discloses a capsule that presents a bar code disposed in concentric manner in an intercalary zone of an entry or exit flow side. This solution proposes the use of a laser device for recognition of said bar code, so that there is no issue about improving image recognition conditions.

Another relevant aspect is the disposition of the optical recognition means inside of a beverage preparation machine, in particular inside of an extraction device adapted for extraction of the edible substance contained inside of a capsule. In fact, in the case of image recognition cameras, the exiguity of space constrains the angle of observation.

The prior art includes several solutions that disclose a placement of the recognition means in an extraction device in such a manner that corresponds to a peripheral zone of a top wall of the package (e.g., WO 02/28241 A1), to a side wall (e.g., WO 2012/010317 A1) and to both top and side wall (e.g., EP 2227120 B1). However, the disposition of the recognition means in a peripheral zone presents several construction constrains, including in terms of available space and of greater complexity of the image recognition algorithms and respective processing requirements, and even in terms of an effective sealing of said recognition means to pressurized fluids inside of a respective extraction device for preparing a beverage from such a recognizable capsule.

### General description of the invention

The objective of the present invention is to provide a single portion package, including in the form of a rigid capsule, flexible pod or sachet, adapted for collecting an edible substance and comprising at least one external surface with a generally circular shape and that presents an image, whereby said image is adapted so that at least part of said image, notably at least an identity mark, can be visually recognized by human means, and at least part of said image can be recognized by automatic image processing means, in a more reliable and faster manner with less construction complexity.

In particular, it is further an objective that the means that enable a more efficient processing of at least part of said image of external surface by automatic image processing means, are less, preferentially little, visually perceptible to users than said identity mark.

The aforementioned objective is solved according to the present invention by means of a single portion package according to claim 1.

According to a first inventive aspect, the aforementioned objective is solved according to the present invention by means of a single portion package that presents at least one visually recognizable identity mark and at least one marker associated therewith and optically recognizable, adapted so that said single portion package can be recognized in a more reliable and quick manner, regardless of the angular position in which it is inserted into a machine for preparing edible product by a user, in particular relative to at least one quadrant, preferentially to a plurality of reference observation quadrants (A, B), generally corresponding to the direction observation of said single portion package by an image capture device.

Said identity mark corresponds to at least one visible coherent symbols that can be recognized and interpreted by human means, including at least one graphic drawing, such as for example a logotype or part of a logotype, or alphanumeric symbols, or similar, and does not therefore correspond to codes of visible geometric shapes, such as for example a bar code, or similar.

A related objective of the present invention is to provide a system for preparing edible products, for example aromatic beverages such as espresso type coffee, tea and similar, based upon a respective edible substance contained in said single portion package, and that comprises at least two types of single portion package presenting an image on at least one respective external surface of a part adapted for flow entry and/or exit, and at least one type of machine comprises at least one package collection device adapted for collecting said types of single portion packages, whereby said system for preparing edible products should provide the recognition of each type of single portion package based upon said image, including by means of at least one characteristic mark provided by at least one of said external surfaces, in a more reliable and faster manner at less construction complexity.

Said types of single portion package present a flow entry part and a flow exit part, provided successively along a prevailing flow direction inside of said package, whereby said flow entry part can be provided in the form of a lid-like element, and said flow exit part can be provided as part, in particular as the base wall part, of a container-like element of said single portion package, and vice-versa.

Moreover, said types of single portion package present substantially similar external forms and dimensions, and differ in at least one parameter associated with the ingredients inside thereof, including type of substance, mixture of substances, quantity, dimension or other product parameter.

The aforementioned objective is solved according to the present invention by means of a system for preparing edible products according to claim 10.

It is preferred when the system comprises automatic image processing means that include an image capture device and image processing device adapted so as to operate image processing software.

It is preferred when the system comprises an image capture device associated with the package collection device so that can observe said external surface at distance inferior to 2 cm, preferentially at a distance inferior to 1 cm.

It is preferred when the system further comprises a presence recognition device associated with said package collection device and adapted so as to recognize the presence of a single portion package inside of said machine, preferentially next to said package collection device.

Another objective of the present invention is to provide a process for preparing edible products based upon an automatic recognition of at least part of the image, including at least one symbol, presented by at least one external surface of at least two types of single portion packages.

The aforementioned objective is solved according to the present invention by means of a process according to claim 13.

It is preferred when the process further includes at least one of the steps:
- associating the result of an eventual correspondence to a set of previously defined operation parameters of said machine for operating with said single portion package;
- associating the result of an eventual correspondence to an information variable associated with the type of single portion package;
- associating the result of said analysis of the captured image, preferentially by means of said image processing device, to at least one message including at least one of expression, symbol or image recognizable by human means, whereby said message is displayed to a user of said machine by means of a display provided in said machine or on a remote device, such as for example a mobile phone or similar;
- recording the result of said analysis of the captured image in data means provided on said machine,
- optionally, communicating at least some results of said analysis of captured image to data means external to said machine.

It is preferred when the capture of image by an image capture device includes illuminating said external surface by means of a lighting device, before closure of said package collection device, preferentially immediately after an indication of presence is provided by a presence recognition device adapted so that can recognize the presence of a single portion package inside of said package collection device.

In the scope of the present invention, the following expressions are used with the following general meanings:
- by "image" it is understood a description of physical characteristics exhibited by a surface when exposed to electromagnetic radiation in at least one of the visible, infrared and ultraviolet ranges,
- by "coherent symbol" it is understood a visible graphism that provides a coherent interpretation by human means of the information represented by said symbol beside of the mere recognition of the type of symbol. Examples include alphanumeric symbols, eventually grouped in expressions such as words, and symbolic graphisms associated for example with an idea, concept or entity. Codes, such as for example bar codes, are examples of symbols from which information can only be extracted by mechamic means, besides of the mere recognition of the type of graphism;
- by "central zone" of an external surface of single portion package, it is understood the zone that extends up to at most about 35% of the characteristic dimension, for example diameter, from the center of the external surface of package, and by "peripheral zone" it is understood the zone that extends up to at most about 35% of the characteristic dimension, for example diameter, from the perimeter of said external surface of package.

### Description of the figures

The present invention shall be hereinafter explained in greater detail based upon the preferred embodiments and attached Figures.

The Figures show., in simplified schematic representations:
- Figure 1:: side view of a first embodiment of a system for preparing beverages according to the present invention;
- Figure 2:: side-cut view (on the left-side) and top view (on the right-side) of a first embodiment of a single portion package (1) according to the present invention;
- Figure 3:: side-cut view (on the left-side) and top view (on the right-side) of a second embodiment of a single portion package (1') according to the present invention;
- Figure 4:: top view of a third embodiment of two types of single portion package (1, 1') according to the present invention;
- Figure 5:: top view of a fourth embodiment of two types of single portion package (1, 1') according to the present invention;
- Figure 6:: top view of a fifth embodiment of two types of single portion package (1, 1') according to the present invention;
- Figure 7:: top view of a sixth embodiment of two types of single portion package (1, 1') according to the present invention;
- Figure 8:: side view (on the left-side) and front view of a collection device (11) included in a system (10) according to the present invention.

### Detailed description of preferred embodiments of the invention

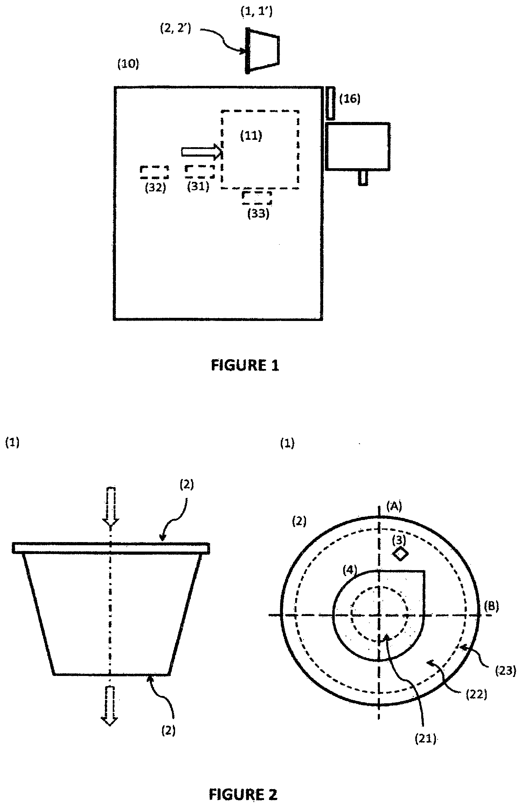

**Figure 1** represents an embodiment of a system for preparing edible products according to the present invention. In the case of this embodiment, said system includes a machine (10) for preparing beverages and comprising at least one type of package collection device (11) adapted so that can collect at least two types of single portion package (1, 1') comprising an edible substance percursor of a beverage. Said types of single portion package (1, 1') present at least one respective external surface (2, 2') presenting an image visually recognizable and interpretable by users. In particular, said image includes at least one identity mark (4) comprising at least one coherent symbol, such as for example a logotype or an alphanumeric symbol.

Moreover, the system further comprises image recognition means of the image presented by said external surfaces (2, 2'), including an image capture device (31) associated with said package collection device (11), a processing device (32) configured for processing image data by means of a software. O referido dispositivo de captura de imagem (31) é de um modo preferido uma câmara digital.

According to a preferred embodiment, a referida marca de identidade (4) apresenta uma forma, de um modo preferido uma forma assimétrica, de modo que pode ser reconhecida de forma mais fiável e rápida, independentemente da posição angular em que seja introduzida na máquina (10) por um utilizador, em particular relativamente a quadrantes de observação de referência (A, B), correspondendo geralmente à direção de observação de um dispositivo de captura de imagem (31).

Moreover, according to a preferred embodiment of said system for preparing edible products, said machine (10) for preparing beverages further includes a presence recognition device (33) associated with said package collection device (11) so as to recognize the presence of a single portion package (1, 1') inside thereof.

In a preferred embodiment of a beverage preparation process according to the present invention, the capture of image by said image capture device (31) is actuated after an indication by said presence recognition device (33) of the presence of a pacakge (1, 1') inside of the package collection device (11).

**Figure 2** represents a first embodiment of a single portion package (1) according to the present invention, in particular provided in the form of a capsule including a container part and a lid-like part. The expert in the technique abundantly knows this type of packages so that it is here abdicated of describing it in greater detail.

As represented, the top part of said single portion package (1) comprises an external surface (2) in a generally circular shape and present an image that includes at least one identity mark (4), such as for example a logotype recognizable by a user, arranged in at least one of a central zone (21), an intercalary zone (22) and a peripheral zone (23) of said external surface (2) .

According to a first inventive aspect, said external surface (2) further presents a marker (3) in a previously defined position relative to at least one coherent symbol of said identity mark (4) and provided so that can be individually recognized by automatic image recognition means.

Said marker (3) is provided so that can be optically recognized, in at least one of the visible, infrared and ultraviolet spectra, and that at least the relative angular orientation/ position of at least part of the image presented by said external surface (2) can thereby be referenced relative to an observation direction of said image capture device (31) - not represented in this figura -, and preferentially also said identity mark (4) can be recognized by automatic image recognition means.

According to a preferred embodiment, said marker (3) is provided in an asymmetric distribution relative to said external surface (2). Moreover, said identity mark (4) presents an asymmetric form. It is herewith provided a disposition that substantially improves the reliability of image recognition and substantially reduces the image processing requirements, in particular by said image processing device (32).

According to another preferred embodiment, said identity mark (4) and the marker (3) are not provided in a peripheral zone (23) of said external surface (2). This disposition reduces the extension of area occupied by the image to be recognized, that thus corresponds to a fraction of that of the external surface (2), so that provides better observation conditions of said identity mark (4) and marker (3) by an image capture device (31), and smaller processing requirements of said image by an image processing device (32).

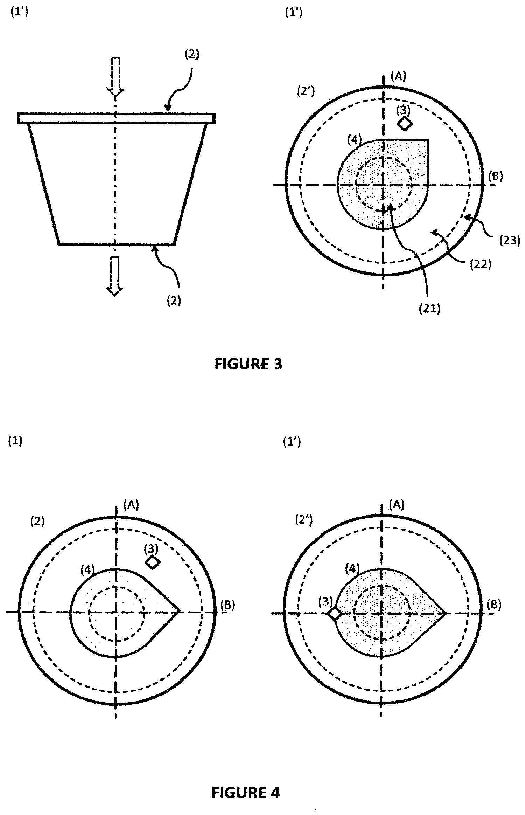

**Figure 3** shows a second embodiment, whereby a second type of single portion package (1') differs from the first type (1) as represented in Figure 2, by the fact that the identity mark (4) presents a different colour or colour tone. In particular, there is further provided only one marker (3) disposed in a similar relative position relative to said identity mark (4) and to said circular external surface (2).

**Figure 4** represents another preferred embodiment of two types of single portion package (1, 1') that are part of a system according to the present invention. In particular, the respective external surfaces (2, 2') present an identity mark (4) of similar shape and different colour, disposed at a similar position relative to the perimeter of the external surface (2, 2'), and a marker (3) of similar shape but disposed at a different position relative to the identity mark (4) and, therefore, also to the perimeter of the external surface. The marker (3) is provided partially inside of the identity mark (4) and presents a different contour and/or filling colour therefrom.

The relative position of the marker (3) in another quadrant, that is, at an angular distance of at least 90°, and different radial distance to the perimeter of external surface, provides an additional recognition element, not only of the relative position of said identity mark (4) relative to reference observation quadrants (A, B), but also an additional parameter associated with a second type of single portion package (1').

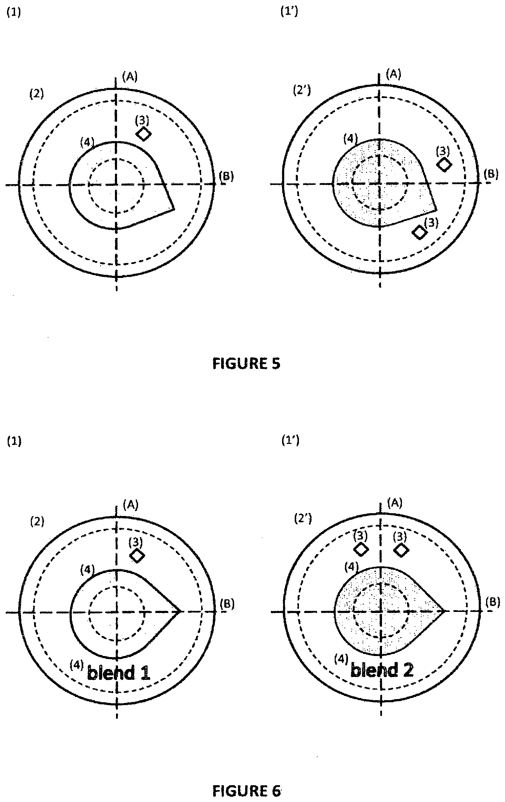

In the case of the embodiment represented in **Figure 5****,** the external surfaces (2, 2') of the two types of single portion packages (1, 1') present an identity mark (4) of similar form and different colour, as well as a marker (3) at a similar position relative to said identity mark (4). Moreover, a second type of single portion package (1') presents a second marker (3).

According to a preferred embodiment, said second marker (3) is also provide in an asymmetric arrangement relative to the surface perimeter of the external surface (2').

According to another particularly preferred embodiment, each of said markers (3) is disposed externally and in the vicinity of said identity mark (4) and at a linear distance between each other that is smaller than the biggest dimension of said identity mark (4), such that their recognition by the automatic image processing means results more reliable and faster.

According to another particularly preferred embodiment, said markers (3) are disposed at a minimum angular distance between each other that is bigger than 20°, preferentially at different quadrants of said external surface (2), that is, at an angular distance bigger than 90°, particularly preferentially bigger than 150°.

In the case of the embodiment represented in **Figure 6****,** the external surfaces (2, 2') of the two types of single portion packages (1, 1') present two different identity marks (4), whereby one corresponds to a coherent symbol in the form of a graphism/ drawing, such as a brand logotype, and the other corresponds to a plurality of coherent symbols in alphanumeric form, such as the designation of a type of beverage, both the identity mars (4) being visually interpretable by users. According to a preferred embodiment, at least one of said identity marks (4) presents an image difference that can be recognized both by users and by automatic image processing means. In the represented example, there is a different colour in the logotype and a different alphanumeric, in this case the numbers "1" and "2".

Moreover, the external surfaces (2, 2') present markers (3) that do not correspond to coherent symbols and that provide references of relative angular orientation of said identity marks (4), in particular in relation to reference observation quadrants (A, B) by an image capture device (31).

In a process of recognition of these types of single portion packages (1, 1'), inserted by users at an aleatory angular orientation, the automatic processing of the captured image is substantially simplified by means of the recognition of said markers (3), in particular as reference of a respective relative angular position/ orientation of insertion of said identity mark (4) relative to the direction of observation by said image capture device (31).

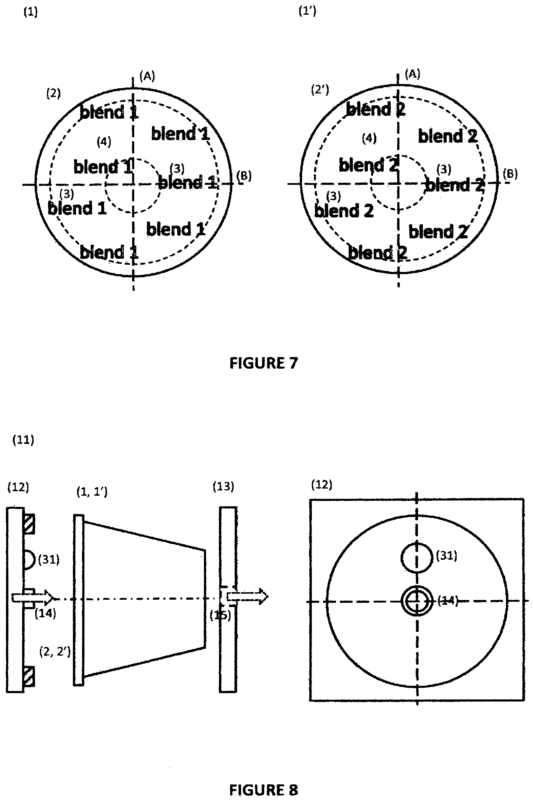

The two types of single portion package (1, 1') represented in **Figure 7****,** correspond to an embodiment of system for preparing edible products according to the present invention whereby said external surfaces (2, 2') present a plurality of identity marks (4), each thereof presenting a plurality of coherent symbols interpretable by users. In particular, said markers (3) are coherent symbols that are part of the set of coherent symbols of the identity mark (4), in this case the letter "e" in the word "blend 1" or "blend 2". According to a preferred embodiment, said symbols (3) differ from the other coherent symbols in at least one of colour, shape and dimension, in this case the colour, so that can be differentiated from other coherent symbols by automatic image recognition means.

As in aforementioned embodiments, said markers (3) are disposed at a minimal distance between each other and next to a respective identity mark (4), preferentially asymmetricaly distributed, preferentially at different quadrants of said external surface (2).

Moreover, in the case of a second type of package (1'), there is provided a different number of markers (3), which can be advantageously used as additional information parameters.

**Figure 8** schematically represents a collection device (11) adapted so that can collect at least one type of single portion packages (1, 1') when in an open position, and that can operate the preparation of an edible product when in a closed position. In particular, said collection device (11) presents an injection part (12) comprising an injection device (14) adapted for injecting a pressurized fluid flow, and a collection part (13) comprising a collection arrangement (15) adapted for collecting a resulting product, such as an aromatic beverage, whereby said injection and collection parts (12, 13) preferentially provide a support for opposing top parts of said single portion package (1, 1') that, when in a closed position, result in the proximity or in direct contact with said top parts.

According to a preferred embodiment, said injection part (12) further presents an image capture device (31) disposed so that can observe said external surface (2, 2') of said single portion packages (1, 1').

Além disso, said image capture device (31) is preferentially disposed in an intercalary zone between the centre and the perimeter of said injection part (12) and there is provided a substantially thin and transparent protective element (18) thereupon along the observation direction thereof, so as to protect said image capture device (31) from the flow injected inside of said collection device (11).

According to another preferred embodiment, said injection part (12) presents image reflecting means, for example mirrored surfaces or similar, disposed so that provide an observation of the image reflex of said external surface (2) to an image capture device (31) disposed on a position other than directly opposing relative to said external surface (2).

In the case of this embodiment, said image capture device (31) comprises a camera, preferentially a digital camera, a lens and further a lighting device (not representaed for keeping the simplicity of the drawing) provided so as to illuminate said external (2) surface during image capture by said image capture device (31). Other embodiments may be considered as a function of the optical properties targeted in the image of said external surface (2).

## Claims

1. **Package** (1) configured for collecting an individual portion of an edible substance and adapted for preparing edible products, such as for example beverages, whereby said package (1) comprises at least one outside surface (2) presenting a generally circular shape and an image that can be recognized by users,
**characterized**
**in that** said outside surface (2) presents at least one of:
- a marker (3) arranged offcentered in relation to said outside surface (2), and
- a plurality of non-concentric markers (3) assymetrically arranged in relation to said outside surface (2),
and further presents an identity mark (4) that comprises at least one coherent symbol that is visually recognizable by users, and presents at least one of asymmetric shape, asymmetric colour and asymmetric disposition relative to said outside surface (2), whereby said markers (3) are provided optically recognizable by automatic image processing means in at least one of in relation to, as part of, and within said identity mark (4), so that at least the angular position of said identity mark (4) can be recognized relative to a reference observation direction by said automatic image processing means, preferentially also the image of said at least one identity mark (4) can be thereby recognized by said automatic image processing means.

2. Package (1) according to claim 1, **characterized in that** said markers (3) are provided in at least one of next to, at least partially inside, and as part of said identity mark (4), and **in that** at least one of said markers (3) and said identity mark (4), are provided in at least one of asymmetric shape and asymmetric distribution relative to said outside surface (2).

3. Package (1) according to claim 1 or 2, **characterized in that** said markers (3) are disposed in at least one of:
- at a minimum angular distance between each other that is bigger than 20° along any angular direction, preferentially are arranged in different quadrants of said outside surface (2), that is, at an angular distance bigger than 90°, particularly preferentially bigger than 150°,
- at a maximum linear distance from said identity mark (4) that is smaller than the size of said identity mark (4), and
- at a minimum linear distance between each other that is smaller than the size of said identity mark (4).

4. Package (1) according to claims 1 to 3, **characterized in that** said markers (3) present at least one of shape, dimension and colour different of at least one coherent symbol of said identity mark (4), at least when said markers (3) correspond to a coherent symbol of said identity mark (4), so that at least one marker (3) can be recognized by said automatic image processing means as being different from other coherent symbols of said identity mark (4).

5. Package (1) according to claims 1 to 4, **characterized in that** said markers (3) are provided non-concentric and non-superimposed, preferentially at a different distance from the perimeter of said outside surface (2) .

6. Package (1) according to any one of previous claims 1 to 5, **characterized in that** there is provided at least one, preferentially at least two markers (3), and at most five, preferentially at most ten markers (3), and **in that** at least one of said markers (3) preferentially presents at least one of shape, dimension and colour different from the other markers (3).

7. Package (1) according to any one of previous claims 1 to 6, **characterized in that** said markers (3) present a dimension at least 40% smaller, preferentially at least 60% smaller than the biggest coherent symbol of said identity mark (4), so that said markers (3) result less visually perceptible to an observer than the biggest coherent symbol of said identity mark (4).

8. Package (1) according to any one of previous claims 1 to 7, **characterized in that** said markers (3) present a dot-like dimension or similar, and a constrat ratio of at least 1.5, preferentially of at least 2.5, particularly preferentially of at least 3.0, so that can be recognized by said automatic image processing means relative to the background of said outside surface (2).

9. Package (1) according to any one of previous claims 1 to 8, **characterized in that** said outside surface (2) presents a central zone (21), an intercalary zone (22) and a peripheral zone (23), whereby said markers (3) are provided in at least one of said central zone (21) and said intercalary zone (22), and said identity mark (4) develops at least in part on said central zone (21) or on said intercalary zone (22), so that the part of image of said outside surface (2) to be recognized is smaller than 80%, preferentially smaller than 65%, particularly preferentially smaller than 50% of the totality of said outside surface (2).

10. **System** for preparing edible products, such as for example beverages, comprising:
- at least two types of packages (1, 1') comprising edible substances, in particular packages (1, 1') according to any one of previous claims 1 to 9,
- at least one type of machine (10) adapted for preparing edible products and that comprises at least one type of collection device (11) that provides a confined space adapted for collecting said types of single portion package (1, 1') inside thereof,
whereby said collection device (11) comprises an injection part (12) and a discharge part (13) that present fluid injection means (14) and beverage discharge means (15), respectively,
- automatic image processing means, preferentially including at least one image capture device (31), adapted for recognizing at least part of the image presented by said outside surfaces (2, 2') of said types of single portion packages (1, 1'),
**characterized**
**in that** said types of single portion packages (1, 1') present at least one, preferentially at least two optically recognizable markers (3) on a respective outside surface (2, 2'), and at least one visible identity mark (4) comprising at least one coherent symbol, whereby the images presented by said outside surfaces (2, 2') differ in at least one image parameter associated with at least one of respective markers (3) and identity mark (4), from the group of image parameters in at least one of the visible, infrared and ultraviolet ranges, and including shape, number, dimension, distribution, relative position, colour and contrast, number of colours and number of contrasts, surface reflexion.

11. System according to claim 10, **characterized in that** said image capture device (31) is provided in at least one of:
- an interior part of said machine (10), preferentially associated with said collection device (11),
- an external part of said machine (10) and
- and external part of a communications device, whereby said image capture device (31) comprises a camera, preferentially a digital camera, a lens and a lighting device.

12. System according to claims 10 or 11, **characterized in that** said image capture device (31) is provided associated with said collection device (11) so that can observe said outside surface (2) in at least one of:
- directly, preferentially disposed in an intercalary zone between the centre and the perimeter of said injection part (12), and **in that** there is provided a substantially thin and transparent protecting element (18) upon said image capture device (31) along the observation direction thereof, so as to protect said image protection device (31) from the flow injected inside of said collection device (11);
- indirectly, for example oriented to a reflecting element of mirror type or similar, provided at least partially opposite to said outside surface (2).

13. **Process** for preparing an edible substance, como por exemplo uma bebida, based upon an edible substance provided in a single portion package (1, 1'), in particular a single portion package (1) according to any one of previous claims 1 to 9, **characterized in that** includes the steps:
- providing a machine (10) adapted for preparation of edible products and presenting at least one collection device (11);
- providing a single portion package (1, 1') containing at least one edible substance to said collection device (11);
- capturing, by means of said image capture device (31), at least part, preferentially at least 40% and at most 80% of the central fraction, of the image of the outside surface (2, 2') of said single portion package (1, 1');
- analysing, by means of an image processing device (32), said captured image, including characterization of at least one of relative orientation and position of at least one of markers (3) and identity mark (4) on said outside surface (2, 2') relative to a direction of observation by said image capture device (31).

14. Process according to claim 13, **characterized in that** por the analysis of the captured image further includes:
- characterization of at least one, preferentially of a plurality of image parameters associated with at least one of markers (3), identity mark (4) and a respective background, and
- comparison of at least one image parameter associated with at least one of said markers (3), identity mark (4) and background of the captured image, with at least one of a plurality of reference images and a plurality of previously defined reference image parameters.

15. Process according to claims 13 or 14, **characterized in that** further includes at least one of the steps:
- determination of an eventual correspondence between a captured image and at least one of said plurality of previously defined reference images;
- determination of an eventual correspondence between at least one of said image parameters and at least one among a plurality of previously defined reference image parameters.
